# EUROPÄISCHE PATENTSCHRIFT

(11) **EP 2 020 068 B1**
(45) Veröffentlichungstag und Bekanntmachung des Hinweises auf die Patenterteilung: **17.01.2018**
(21) Anmeldenummer: 07725269.0
(22) Anmeldetag: 16.05.2007
(51) Int. Cl.: H02H 3/08, H01H 9/54

(54) **VORRICHTUNG ZUM SELBSTTÄTIGEN ABSCHALTEN ODER SCHALTEN EINES ELEKTRISCHEN VERBRAUCHERS**
DEVICE FOR AUTOMATICALLY SWITCHING OFF OR SWITCHING ON AN ELECTRICAL CONSUMER
DISPOSITIF DE MISE HORS CIRCUIT OU MISE EN CIRCUIT AUTOMATIQUE D'UN RÉCEPTEUR ÉLECTRIQUE

(30) Priorität: 24.05.2006 DE 102006025604
(43) Veröffentlichungstag der Anmeldung: 04.02.2009
(73) Patentinhaber: Friedrich Lütze GmbH, 71384 Weinstadt-Grossheppach (DE)
(72) Erfinder: SCHINDLER, Andreas, 73630 Remshalden (DE); COORS, Ralf, 96170 Priesendorf (DE); JÜNGLING, Klaus, 74232 Abstatt (DE)
(74) Vertreter: Crazzolara, Helmut
(86) Internationale Anmeldenummer: PCT/EP2007/004353
(87) Internationale Veröffentlichungsnummer: WO 2007/134768

(56) Entgegenhaltungen:
- WO-A-2004/082091
- DE-A1- 19 734 589
- DE-A1- 19 833 984

## Beschreibung

Die Erfindung betrifft eine Vorrichtung zum selbsttätigen Abschalten oder Schalten eines elektrischen Verbrauchers gemäß dem Oberbegriff des Anspruchs 1.

Derartige Vorrichtungen sind vielseitig einsetzbar, insbesondere im Bereich der Industrieautomation und zugehöriger Steuer- und Regelaufgaben. Ein typischer Einbauort sind Unterverteilungen oder Schaltschränke. An derartige Vorrichtungen sind elektrische Verbraucher anschließbar, beispielsweise Aktoren, wie Motoren oder Ventile, oder Sensoren, wie Temperaturfühler oder Druckmesser. Die Anschlusswerte der anzuschließenden Verbraucher, insbesondere deren Anschlussleistung und deren Nennstrom, können dabei unterschiedlich sein, und es muss üblicherweise eine entsprechende Vielfalt an gattungsgemäßen Vorrichtungen vorgehalten werden, insbesondere an den Montageort solcher Vorrichtungen mitgeführt werden.

Aus der WO 00/74196 A1 ist ein Stromverteilungssystem im Niedervoltbereich bekannt, bei dem jedem Stromkreis ein gattungsgemäßer Schutzschalter mit einstellbarer Strombegrenzung als Kurzschluss- und/oder Überlastschutz zugeordnet ist. Die Besonderheit darin liegt, dass im Überlastfall bei Überschreiten einer ersten einstellbaren Stromschwelle eine Sperrung des Leistungsteils nach Ablauf einer ersten einstellbaren Abschaltzeit erfolgt, und im Kurzschlussfall eine Begrenzung des Stromes durch das Leistungsteil auf eine zweite einstellbare Stromschwelle sowie eine Sperrung des Leistungsteils nach Ablauf einer zweiten Abschaltzeit erfolgt. Der bekannte Schutzschalter weist Steuereingänge und Signalausgänge auf, die an eine Signalleitung oder eine Busschnittstelle geführt sind. Die Verbraucher sind nur einpolig mit ihrem jeweiligen Pluspol an dem Schutzschalter angeschlossen, insbesondere sind die Minuspole aller Verbraucher unmittelbar mit dem Minuspol des Netzteils verbunden.

Im Falle eines dauerhaften Fehlerfalles, beispielsweise eines dauerhaften Kurzschlusses, muss die Vorrichtung von dem Verbraucher abgeklemmt und ausgebaut werden, und die Vorrichtung und der Verbraucher bzw. Lastkreis müssen separat voneinander untersucht werden, um die Fehlerquelle zu ermitteln.

Die DE 198 33 984 A1 beschreibt eine gattungsgemäße Vorrichtung zum selbsttätigen Abschalten oder Schalten eines elektrischen Verbrauchers, wobei die Vorrichtung ein in Reihe mit einer Lastleitung des elektrischen Verbrauchers geschaltetes elektronisches Stellelement sowie eine Steuereinheit aufweist, die anhand einer Auslösecharakteristik einen über die Lastleitung fließenden Strom auswertet und das elektronische Stellelement ansteuert, wobei der Verbraucher mindestens zweipolig an der Vorrichtung anschließbar ist, und wobei die Vorrichtung ein Kontaktorgan aufweist, mittels dem die Vorrichtung mit einem Pol einer Gleichstrom-Versorgungsleitung elektrisch verbindbar ist.

Auch die WO 2004/082091 A1 offenbart eine Vorrichtung zum Abschalten und Schalten eines elektrischen Verbrauchers.

Der Erfindung liegt daher die Aufgabe zugrunde, eine Vorrichtung bereitzustellen, welche die Nachteile des Standes der Technik überwindet. Insbesondere sollen die aus gattungsgemäßen Vorrichtungen zusammengestellten Systeme kostengünstig in der Herstellung und Wartung, einfach anpassbar an veränderte Gegebenheiten und dabei dennoch dauerhaft zuverlässig im Betrieb sein.

Diese Aufgabe ist durch die im Anspruch 1 bestimmte Vorrichtung gelöst. Besondere Ausführungsarten der Erfindung sind in den Unteransprüchen bestimmt.

Gemäß dem Kennzeichen des Anspruch 1 zeichnet sich die erfindungsgemäße Vorrichtung dadurch aus, dass das Kontaktorgan in der Vorrichtung bewegbar gelagert ist und infolge der Bewegung sich federelastisch verformt und dadurch mit der Versorgungsleitung elektrisch verbindbar ist.

Dadurch ist für die Herstellung der Verbindung mit der Versorgungsleitung kein besonderes Werkzeug erforderlich und die Verbindung kann dennoch einfach hergestellt und gelöst werden. Hierfür kann das Kontaktorgan zusätzlich zur federelastisch verformbaren Ausbildung beispielsweise durch eine Dreh- oder Schiebebewegung in elektrische Verbindung mit der Versorgungsleitung gebracht werden. Die Vorrichtung kann dadurch an einer Trag- oder Hutschiene festgelegt werden, ohne dass sie automatisch mit der Versorgungsleitung elektrisch verbunden ist. Erst durch Betätigen des Kontaktorgans, beispielsweise durch Schieben oder Drehen, wird die Verbindung hergestellt und kann bei Bedarf auch wieder gelöst werden, sodass die Vorrichtung auch im eingebauten Zustand spannungsfrei gemacht werden kann. Dies ist insbesondere bei der Montage oder im Falle eines Austausches der Vorrichtung von Vorteil, weil die benachbarten Vorrichtungen nicht deinstalliert werden müssen.

Der Verbraucher ist mindestens zweipolig, vorzugsweise allpolig an der Vorrichtung anschließbar. Dadurch ist eine klare Zuordnung des Verbrauchers zu der zugehörigen Vorrichtung gewährleistet. In einem Störfall kann nur der betroffene Verbraucher abgeschaltet werden, wohingegen die weiteren Verbraucher in Betrieb bleiben. Dadurch ist die Ausfallzeit des zugehörigen Gesamtsystems reduziert.

Der mehrpolige und insbesondere allpolige Anschluss des Verbrauchers an eine erfindungsgemäße Vorrichtung ist zwar mit einem gegebenenfalls auch erheblichen Mehraufwand bei der Installation verbunden, insbesondere mit einem erhöhten Aufwand hinsichtlich der Verdrahtung und Verkabelung. Es hat sich jedoch gezeigt, dass eine erfindungsgemäße Anordnung im Betrieb besondere und zum Teil unerwartete Vorteile in technischer und wirtschaftlicher Hinsicht bietet, insbesondere bei einem Einsatz in Gleichstrom-Versorgungsanlagen im Bereich der Industrieautomation und zugehöriger Steuer- und Regelaufgaben mit Nennspannungen von 12 und 24 Volt.

So können in einem Fehlerfall die betroffenen Lastkreise schnell abgeschaltet werden, gegebenenfalls auch über eine Steuerleitung oder einen Busanschluss der Vorrichtung von einer neben- oder übergeordneten Steuerung. Alternativ oder ergänzend zu einer Abschaltung mittels eines elektronischen Schalters kann auch eine galvanische Trennung beispielsweise über ein Relais erfolgen. Der betroffene Lastkreis ist damit gegebenenfalls nicht nur spannungsfrei etwa gegen Erdpotential, sondern auch potentialfrei, weil alle Pole abschaltbar sind. Auf diese Weise sind im abgeschalteten Zustand Prüfmessungen ohne äußere Störeinflüsse an dem Verbraucher möglich.

In einem Ausführungsbeispiel werden solche Prüfmessungen von der Vorrichtung selbst durchgeführt, vorzugsweise von der Steuereinheit, die auch das Stellelement und damit die Abschaltung steuert. Die ermittelten Messwerte können lokal an der Vorrichtung ausgelesen werden und/oder über eine Steuerleitung oder einen Busanschluss der Vorrichtung an eine neben- oder übergeordnete Steuerung übermittelt werden. Typische Prüfmessungen sind die Prüfung auf Kontakt bzw. Durchgang, Kurzschluss, Isolationsfestigkeit oder dergleichen. Wenn die angeschlossenen Verbraucher über die Anschlussleitungen nicht nur ihre elektrische Energie, sondern auch Signal empfangen, oder über die Anschlussleitungen Signale senden, beispielsweise von den Verbrauchern erfasste Messwerte als hochfrequente oder digitale Signale über die Energieversorgungsleitung senden, kann auch die Funktionsfähigkeit des Verbrauchers von der Vorrichtung geprüft werden. Im angeschlossenen Zustand kann die Vorrichtung außerdem eine Differenzstrommessung auf den mindestens zwei Adern der Anschlussleitung durchführen, und dadurch einen auftretenden Isolationsfehler frühzeitig erkennen, bevor ein Kurzschluss zu einem großen Schaden führen kann.

In einem Ausführungsbeispiel ist für jeden Anschlusspol des Verbrauchers eine Anschlussklemme und ein zugehöriges Stellelement vorgesehen. Die Anschlussklemmen sind vorzugsweise schraubenlos, so dass man für das Anschließen der Versorgungsleitung kein Werkzeug benötigt. Die Ausrichtung der Öffnungen der Anschlussklemmen schließt mit der durch eine Grundfläche des Gehäuses der Vorrichtung definierten Ebene einen spitzen Winkel zwischen 20 und 85° ein, insbesondere zwischen 45 und 75° und vorzugsweise zwischen 60 und 70°. Dadurch ist der Anschluss weiter vereinfacht.

In einem Ausführungsbeispiel ist die Auslösecharakteristik mindestens auch durch den Parameter des Leistungs- oder Stromintegrals bestimmt, d.h. durch das Integral der Leistung oder des über die Lastleitung fließenden Stromes über der Zeit, und der Grenzwert für dieses Integral ist durch das Einstellmittel unmittelbar einstellbar. Um den Einfluss von gegebenenfalls irrelevanten langsamen Veränderungen beispielsweise des Stromwertes herauszufiltern, kann das Integral nur über eine jeweils zurückliegende Integrationszeit gebildet werden, beispielsweise über die jeweils zurückliegenden fünf Sekunden; länger zurückliegende Werte werden bei der Integration nicht mehr berücksichtigt. Die Integrationszeit kann dabei konstant sein, oder ebenfalls manuell oder selbsttätig von der Vorrichtung einstellbar sein, beispielsweise in Abhängigkeit von dem angeschlossenen Verbraucher oder der aktuellen Lastsituation.

In einem Ausführungsbeispiel ist das Stellelement ein Schalterelement, das im Wesentlichen den Strom abschaltet und wieder zuschalten kann. Dies kann durch einen Transistor erfolgen, der außerdem die Möglichkeit bietet, den Laststrom zu regeln, insbesondere zu begrenzen.

In einem Ausführungsbeispiel kann das Einstellmittel durch einen Schiebe- oder Drehschalter oder ein Schiebe- oder Drehpotentiometer realisiert sein, das an eine mikrocontrollerbasierte Steuereinheit angeschlossen ist und mit dem die Parameter für die Auslösecharakteristik eingestellt werden können. Um insbesondere ein unbeabsichtigtes Verstellen zu verhindern, kann das Einstellelement eine Werkzeugangriffsfläche aufweisen, sodass es nur mit einem geeigneten Werkzeug betätigt werden kann. Das Einstellmittel ist vorzugsweise an einer Front- oder Stirnfläche der Vorrichtung angebracht, insbesondere in der Nähe des Typenschildes, mit dem das Einstellmittel auf einfache Weise als solches gekennzeichnet werden kann.

Durch das Einstellmittel ist der entsprechende Parameter vorzugsweise zwischen einem vorgegebenen unteren Grenzwert und einem vorgegebenen oberen Grenzwert in Stufen oder stufenlos einstellbar. Der untere und/oder obere Grenzwert kann dabei fest durch die Steuereinheit vorgegeben sein, gegebenenfalls auch hartverdrahtet, beispielsweise durch den Einbau entsprechender Vorwiderstände. Darüber hinaus ist es auch möglich, in der Steuereinheit in einem unveränderlichen oder frei programmierbaren Speicherbereich diese Grenzwerte abzulegen und bei Bedarf an veränderte Umstände anzupassen.

Die Vorrichtung kann in Reihe mit dem Verbraucher zwischen einer Versorgungsleitung einer Gleichspannungsversorgung und dem zugehörigen Massepotential geschaltet sein. Im Falle einer Wechselspannungsversorgung liegt die Vorrichtung in Reihe mit dem Verbraucher zwischen einer Phase und dem Nullleiter oder zwischen zwei Phasen. Ein typisches Anwendungsgebiet ist der Einsatz in Gleichstrom-Niederspannungsversorgungen mit einer Nennspannung von 24 V. Die Vorrichtung kann dabei in einem Gehäuse angeordnet sein, mittels dem die Vorrichtung lösbar auf einer Tragschiene festlegbar ist und auf der Tragschiene in der Art einer Reihenklemme an weitere erfindungsgemäße Vorrichtungen und/oder an andere Komponenten der elektrischen Installation, wie beispielsweise Einspeiseklemmen, Signalisierungselemente und dergleichen, anreihbar ist. In einem Ausführungsbeispiel weist das Gehäuse hierzu zwei schräg oder quer zur Längsrichtung der Tragschiene verlaufende, zueinander vorzugsweise planparallele Seitenflächen auf.

Zwei wesentliche Parameter der Auslösecharakteristik sind der Nennstromwert und die Abhängigkeit einer Ansprechzeit, nach deren Ablauf das Stellelement angesteuert wird, von dem tatsächlichen Laststrom. In einem Ausführungsbeispiel weist die Vorrichtung ein einziges Einstellmittel auf, mit dem diese beiden Parameter gleichzeitig verändert werden. Beispielsweise kann durch ein stufenförmiges, insbesondere dreistufiges Einstellmittel zwischen einer genormten Auslösecharakteristik B oder C für einen Leitungsschutz, G oder K für einen Schutz nachgeschalteter Geräte und Motoren, oder Z für einen Schutz von Halbleiterbauelementen und Messkreisen von Spannungswandlern gewählt werden.

In einem anderen Ausführungsbeispiel kann ein erstes und/oder ein zweites stufenförmiges oder stufenloses Einstellmittel vorgesehen sein, mit dem der Nennstromwert und die Abhängigkeit der Ansprechzeit getrennt voneinander eingestellt werden können. Dadurch kann die Vorrichtung an alle infrage kommenden Einsatzmöglichkeiten angepasst und insbesondere vor Ort bei der Montage eingestellt werden. So können beispielsweise hohe Nennstromwerte mit einem flinken Ansprechverhalten ebenso eingestellt werden wie geringe Nennstromwerte mit einem trägen Ansprechverhalten, und es kann hierfür ein und dieselbe Vorrichtung eingesetzt werden.

Ungeachtet der Einstellmöglichkeiten kann die Vorrichtung mit einer werkseitig oder mit einem erhöhten apparatetechnischen Aufwand auch noch später einstellbaren Grundeinstellung ausgerüstet sein. Diese Grundeinstellung kann durch ein vorgesehenes Mittel aktiviert werden, beispielsweise durch eine hierfür vorgesehene Taste oder auch durch eine gegebenenfalls auch rastbare End- oder Zwischenposition der Einstellmittel. Mit einer solchen Grundeinstellung können die Vorrichtungen werkseitig ausgeliefert werden und nur bei Bedarf und insbesondere vor Ort bei der Montage durch Betätigen der Einstellmittel an die örtlichen Gegebenheiten angepasst werden, insbesondere an die anzuschließenden Verbraucher.

Zum Schutz gegen unbeabsichtigtes Verstellen der Einstellmittel können diese gegenüber dem umgebenden Gehäuse zurückversetzt angeordnet sein und/oder nur mit einem Werkzeug betätigbar sein. Es kommt auch in Betracht, abnehmbare und gegebenenfalls unverlierbar mit dem Gehäuse verbundene Abdeckungen für die Einstellmittel vorzusehen. Als weitere Alternative kommt in Betracht, eine Art Plombe an dem Einstellmittel vorzusehen, die beim erstmaligen Betätigen beschädigt oder zerstört wird, beispielsweise einen einstückig mit dem Gehäuse der Vorrichtung ausgebildeten Steg, der beim erstmaligen Betätigen des Einstellmittels abbricht. Dadurch wäre in einem eventuellen Schadensfall nachweisbar, dass die Vorrichtung zumindest temporär mit gegenüber der Grundeinstellung veränderten Einstellungen betrieben wurde.

Als weitere Sicherheitsmaßnahme kann ein Sicherungselement vorgesehen sein, mittels dem die Grundeinstellung oder eine vorgenommene Einstellung des Einstellmittels gegen unbeabsichtigtes oder unbefugtes Verändern sicherbar ist. Beispielsweise kann eine Sicherungstaste vorgesehen sein, die mit der Steuereinheit verbunden ist und auf elektrische bzw. elektronische Weise die aktuelle Einstellung des Einstellmittels sichert. Alternativ oder ergänzend kann beispielsweise ein mechanischer Riegel oder ein Klemmstück vorgesehen sein, bei dessen Betätigung die Einstellung des Einstellmittels nicht verändert werden kann und dadurch auf mechanische Weise die aktuelle Einstellung des Einstellmittels gesichert ist.

Der zeitliche Verlauf des über die Lastleitung fließenden Stromes kann auf unterschiedliche Weise ausgewertet werden. Im einfachsten Fall wird ein Überschreiten des eingestellten oder vorgegebenen Maximalstromes oder Nennstromes registriert und daraufhin das Stellelement schnellstmöglich und insbesondere ohne gesteuerte Verzögerung abgeschaltet und dadurch der Stromkreis zum Verbraucher unterbrochen. In vielen Anwendungsfällen ist dagegen die Leistungs- oder Energieaufnahme zum Verbraucher entscheidend, wohingegen sehr kurzzeitige Stromspitzen toleriert werden können. Um für diese Anwendungsfälle eine geeignete Auslösecharakteristik bereitzustellen, kann es vorteilhaft sein, jedenfalls auch parallel zur Beurteilung des fließenden Stromes das Integral des Stromes i(t) über der Zeit oder auch das Integral des Stromes i(t) im Quadrat über der Zeit zu erfassen oder zu berechnen und beim Auslöseverhalten zu berücksichtigen.

Im Falle einer mikrocontrollerbasierten Steuereinheit können die Stromwerte in regelmäßigen Abständen erfasst und digital weiterverarbeitet werden. Die so erhaltenen Stromwerte können mit in der Steuereinheit oder der Vorrichtung abgespeicherten Werten verglichen werden. Die Zeit zwischen zwei Abtastwerten für den über die Lastleitung fließenden Strom kann dabei konstant sein, insbesondere aus einem Takt der Steuereinheit abgeleitet sein, oder variabel, beispielsweise automatisch in Abhängigkeit der Stromänderung di(t)/dt gewählt werden, um auch bei sehr schnellen Änderungen des Stromes erforderlichenfalls noch sicher abschalten zu können.

Das Kontaktorgan kann beispielsweise in einer von zwei Endstellungen in elektrischer Verbindung mit der Versorgungsleitung sein.

In einer Ausführungsart ist die Vorrichtung mindestens zweipolig, vorzugsweise allpolig mit der gegebenenfalls mehrphasigen Versorgungsleitung elektrisch verbindbar. Dadurch sind die Diagnosemöglichkeiten erhöht, beispielsweise können Fehlerstrommessungen oder Isolationsmessungen durchgeführt werden, und die Signalentkopplung in einem System mit mehreren gattungsgemäßen Vorrichtungen ist verbessert.

In einer Ausführungsart weist die Vorrichtung mindestens ein Trennelement zum galvanischen Trennen der Vorrichtung von dem Verbraucher und/oder der Versorgungsleitung auf. Das Trennelement kann in Reihe zu dem Stellelement liegen und von der Steuereinheit steuerbar sein. Dadurch ist eine zusätzliche Sicherheit für den Fall gegeben, dass das in einem Ausführungsbeispiel durch ein Halbleiterbauelement gebildete Stellelement ausfällt, insbesondere einen Kurzschluss aufweist. Das Trennelement kann durch ein elektromagnetisches Relais realisiert sein. Wenn eine noch höhere Sicherheit gefordert ist, kann alternativ oder zusätzlich zum Trennelement eine an sich bekannte Schmelzsicherung in Reihe geschaltet sein.

Im Fall eines Auslösens der Vorrichtung kann diese entweder im ausgeschalteten Zustand verharren oder nach einer vorgegebenen Zeitdauer selbsttätig wieder in den eingeschalteten Zustand übergehen, insbesondere durch langsames Durchsteuern des Stellelements und gleichzeitiger Ermittlung des über die Lastleitung fließenden Stroms. Sollte dieser weiterhin unzulässig hoch sein, kann die Vorrichtung nach einer vorgebbaren Anzahl derartiger Versuche in einen dauerhaft ausgeschalteten Zustand übergehen. Alternativ oder ergänzend hierzu kann die Vorrichtung auch ein Rücksetzelement aufweisen, wobei dieses auch durch einen entsprechenden Signaleingang gebildet sein kann, über den die Vorrichtung ein Rücksetzsignal von einer über- oder nebengeordneten Steuereinrichtung erhält. Weiterhin alternativ oder ergänzend kann das Rücksetzelement auch von außerhalb der Vorrichtung unmittelbar manuell oder mittelbar mit einem Werkzeug manuell betätigbar sein, beispielsweise durch eine Rücksetztaste unmittelbar an der Vorrichtung. In einem Ausführungsbeispiel ist nur ein manuelles Rücksetzen möglich, insbesondere erfolgt keine automatische Rücksetzung. Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind.
- Fig. 1: zeigt eine Seitenansicht eines Ausführungsbeispiels einer erfindungsgemäßen Vorrichtung;
- Fig. 2: zeigt eine perspektivische Ansicht einer Anordnung von insgesamt sieben erfindungsgemäßen Vorrichtungen;
- Fig. 3: zeigt beispielhaft die Einstellbarkeit der Auslösecharakteristik; und

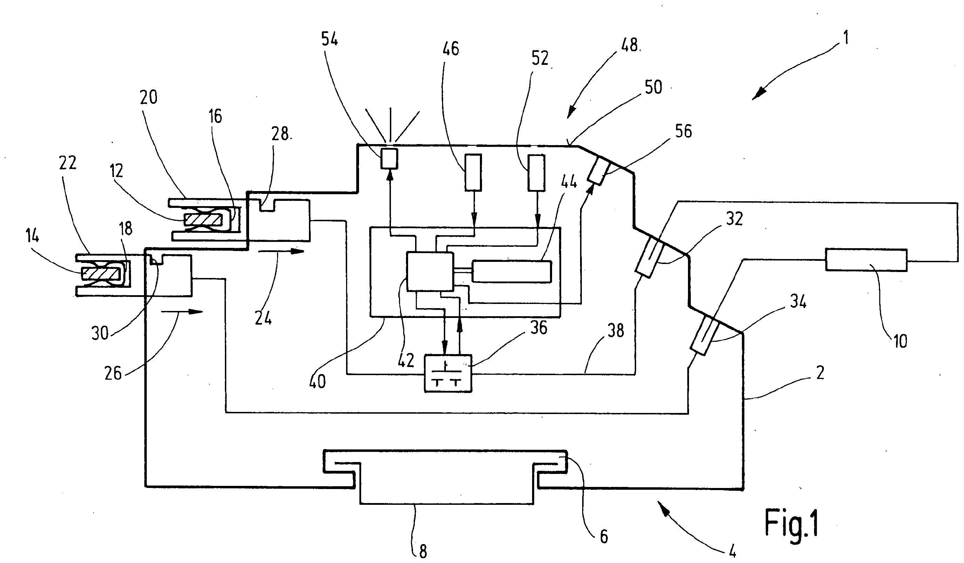

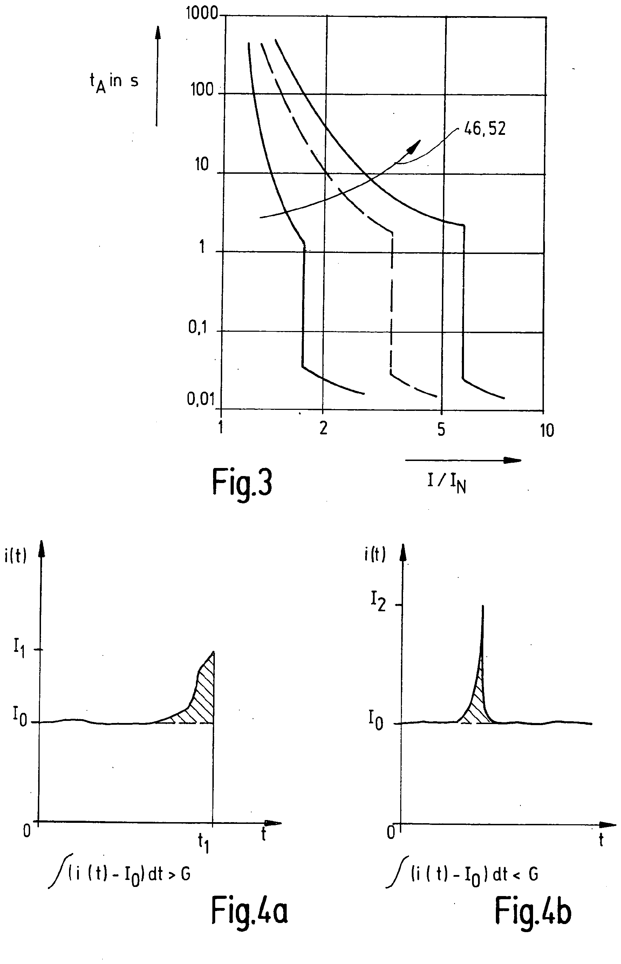

Fig. 4a und 4b zeigen zwei mögliche Signalverläufe für den Laststrom i(t). Die Fig. 1 zeigt eine Seitenansicht eines Ausführungsbeispiels einer erfindungsgemäßen Vorrichtung 1 mit abgenommenem Gehäusedeckel. Die Vorrichtung 1 weist ein prismenförmiges Gehäuse 2 aus Kunststoff auf, wobei die planparallelen Grund- und Deckflächen parallel zur Zeichenebene liegen. Auf einer im eingebauten Zustand in der Regel nicht sichtbaren Unterseite 4 weist das Gehäuse 2 eine hinterschnittene Nut 6 auf, mittels der das Gehäuse 2 auf einer nur symbolisch dargestellten und senkrecht zur Zeichenebene sich erstreckende Trag- oder Hutschiene 8 festlegbar ist.

Die Vorrichtung 1 dient zum Schutz elektrischer Installationen durch Begrenzen der Strom- und/oder Energieaufnahme eines elektrischen Verbrauchers 10 und stellt insbesondere die Funktionalität einer elektronischen rücksetzbaren Lastüberwachung bereit. Die Vorrichtung 1 ist hierzu elektrisch an eine Versorgungsleitung anschließbar. Im Ausführungsbeispiel handelt es sich dabei um eine zweipolige Gleichstrom-Versorgungsleitung mit einer Nennspannung von 12 Volt oder 24 Volt, die durch zwei senkrecht zur Zeichenebene verlaufende Stromschienen 12, 14 bereitgestellt ist. Zum Herstellen der elektrischen Verbindung weist die Vorrichtung 1 für jede Stromschiene 12, 14 ein zugehöriges Kontaktorgan 16, 18 auf, das federelastisch verformbar in einem zugehörigen Kontaktträger 20, 22 angeordnet ist. Der Kontaktträger 20, 22 kann aus einem elektrisch isolierenden Werkstoff bestehen und/oder kann in der Vorrichtung 1 beweglich gelagert sein, im Ausführungsbeispiel entsprechend den Pfeilen 24, 26 rechtwinklig zu den Stromschienen 12, 14 verschiebbar gelagert sein.

Im dargestellten Zustand ist die Vorrichtung 1 zweipolig an die Versorgungsleitung angeschlossen. Die Verbindung mit den Stromschienen 12, 14 kann einzeln hergestellt und unterbrochen werden, wozu die Kontaktträger 20, 26 entweder von außerhalb des Gehäuses 2 unmittelbar manuell bewegbar sind oder mittelbar mit einem Werkzeug manuell bewegbar sind. Im letztgenannten Fall können die Kontaktträger 20, 22 hierzu eine Werkzeugangriffsfläche 28, 30 aufweisen. Im einfachsten Fall kann diese durch eine Vertiefung oder eine Erhebung in der Außenkontur der Kontaktträger 20, 22 gebildet sein. Im Ausführungsbeispiel sind die beiden Kontaktträger 20, 22 einzeln bewegbar. Alternativ hierzu kann auch eine mechanische Kopplung vorgesehen sein, mittels der die beiden Kontaktträger 20, 22 gemeinsam bewegbar sind.

Alternativ zum dargestellten Ausführungsbeispiel kann die Vorrichtung 1 auch nur einpolig mit der Versorgungsleitung verbindbar sein und der zweite Pol der Versorgungsleitung kann über eine gegebenenfalls auch gemeinsam mit weiteren Verbrauchern genutzte und unmittelbar an die Verbraucher 10 angeschlossene Rückleitung verbunden sein.

Der Verbraucher 10 ist ausgangsseitig an der Vorrichtung 1 über Anschlussklemmen 32, 34 anschließbar. Dabei kann es sich um schraubenlose Anschlussklemmen 32, 34 handeln, die mit einem Federkontaktelement ausgerüstet sind und in welche die Anschlussleitung des Verbrauchers 10 nur eingesteckt werden muss.

Im Innern des Gehäuses 2 ist ein elektronisches Stellelement 36, das beispielsweise durch einen MOS-Transistor gebildet ist, in Reihe mit einer das Kontaktorgan 16 mit der Anschlussklemme 32 verbindenden Lastleitung 38 geschaltet. Die Verbindung zwischen dem weiteren Kontaktorgan 18 und der weiteren Anschlussklemme 34 ist im Ausführungsbeispiel durch die Vorrichtung 1 durchgeschleift. Alternativ hierzu kann auch in dieser Verbindungsleitung ein weiteres Stellelement angeordnet sein. Dadurch wäre der Verbraucher 10 allpolig von der Versorgungsleitung abschaltbar und/ oder es können Fehlerstrommessungen durchgeführt werden.

In der Vorrichtung ist eine Steuereinheit 40 angeordnet, die eine zentrale Recheneinheit beispielsweise in Form eines Mikrocontrollers 42 aufweist. Dieser ist datentechnisch mit einem Datenspeicher 44 verbunden, der einen Nur-Lese-Bereich und/oder einen frei beschreibbaren Speicherbereich aufweisen kann. Die Energieversorgung der Steuereinheit 40 kann über die Versorgungsleitung erfolgen, insbesondere kann hierzu die Steuereinheit 40 mit den Kontaktorganen 16, 18 verbunden sein. Alternativ oder ergänzend kann in der Vorrichtung 1 auch ein vorzugsweise über die Versorgungsleitung aufladbarer Energiespeicher angeordnet sein, der jedenfalls einen Notbetrieb der Steuereinheit 40 bei einem Ausfall der Versorgungsspannung gewährleistet. Die Steuereinheit kann über eine Anschlussleitung oder einen Datenbus mit einer neben- oder übergeordneten Steuereinrichtung verbindbar sein und von dort Signale empfangen oder Signale dorthin senden.

Die Steuereinheit 40 und insbesondere der Mikrocontroller 42 steuert das Stellelement 36, beispielsweise den Gate-Anschluss eines Transistors. Füreine Ermittlung des auf der Lastleitung 38 fließenden Stromes kann entweder in der Lastleitung 38 ein so genannter Shunt-Widerstand angeordnet sein, oder alternativ oder ergänzend kann auch das Stellelement 36 selbst ein Signal an die Steuereinheit 40 zurückgeben, das Rückschlüsse auf den in der Lastleitung 38 fließenden Strom gibt. Beispielsweise kann die an der Gate/Source-Strecke abfallende Spannung erfasst werden, die insbesondere unter Berücksichtigung der Parameter des Stellelements 36 und der sonstigen Betriebsparameter Rückschlüsse auf den auf der Lastleitung 38 fließenden Strom zulässt. Der ermittelte Strom wird anhand einer vorgebbaren und insbesondere im Datenspeicher 44 abgelegten Auslösecharakteristik von dem Mikrocontroller 42 ausgewertet und dementsprechend das Stellelement 36 angesteuert, insbesondere abgeschaltet.

Ein oder mehrere Parameter der Auslösecharakteristik sind durch ein erstes Einstellmittel 46 einstellbar, das von außerhalb der Vorrichtung 1 mechanisch zugänglich ist. Im Ausführungsbeispiel ist das erste Einstellmittel 46 im Bereich einer der Unterseite 4 gegenüberliegenden und zu dieser planparallelen Oberseite 48 angeordnet, und gegenüber der Oberfläche 50 zurückversetzt im Innern des Gehäuses 2 angeordnet. Die Oberseite 50 weist eine Gehäuseöffnung auf, in welche ein Werkzeug einführbar ist, mittels dem das erste Einstellelement 46 betätigbar ist. In entsprechender Weise ist ein zweites Einstellmittel 52 angeordnet, das ebenfalls mit der Steuereinheit 40 verbunden ist. Die Einstellelemente 46, 52 können auch bündig mit der Oberfläche 50 abschließen oder sogar über diese hinausragen. Die Einstellelemente 46, 52 können auch unmittelbar manuell betätigbar sein.

Die Vorrichtung 1 weist weiterhin ein optisches Signalelement 54 auf, das mit der Steuereinheit 40 verbunden ist und den Betriebszustand der Vorrichtung 1 signalisieren kann, beispielsweise durch Aussenden von grünem Licht im Falle eines Normalbetriebs und durch Aussenden von rotem Licht im Falle des Auslösens der Vorrichtung 1. Alternativ oder ergänzend können auch akustische oder sonstige Signalelemente vorgesehen sein.

Weiterhin weist die Vorrichtung 1 einen Störmeldeausgang 56 auf, an dem eine Störleitung anschließbar ist, über welche der Betriebszustand der Vorrichtung 1, insbesondere das Auslösen der Abschaltung, an eine neben- oder übergeordnete Steuereinrichtung signalisiert werden kann. Der Störmeldeausgang 56 kann grundsätzlich identisch wie die Anschlussklemmen 32, 34 ausgebildet sein, insbesondere als schraubenloser Federkontakt.

Die Oberflächen des Gehäuses 2, an denen die Anschlussklemmen 32, 34 und/oder der Störmeldeausgang 56 angeordnet sind, sind plan und verlaufen senkrecht zur Zeichenebene der Fig. 1. Diese Oberflächen sind terrassenförmig hinter- und übereinander angeordnet mit einer Schrägstellung zwischen 10 und 45°, insbesondere etwa 30°, gegenüber der Oberfläche 50, und sind miteinander über rechtwinklig zur Oberfläche 50 angeordnete Verbindungsflächen verbunden. Dadurch ist eine platzsparende Anordnung bei gleichzeitig einfacher Bedienung der Anschlussklemmen 32, 34 auch im eingebauten Zustand der Vorrichtung 1 gewährleistet.

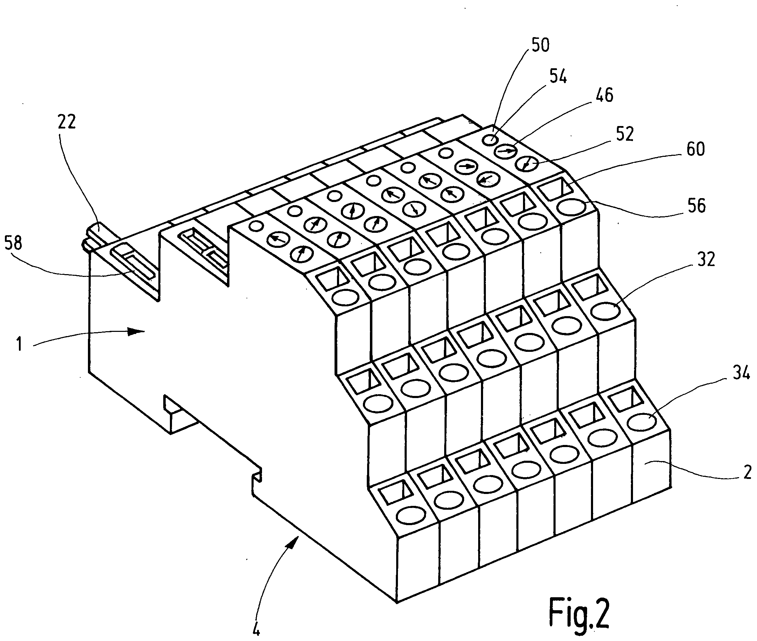

Die Fig. 2 zeigt eine perspektivische Ansicht einer Anordnung von insgesamt sieben erfindungsgemäßen Vorrichtungen 1, die konturengleich aneinandergereiht sind. An der Rückseite ist der erste Kontaktträger 20 nicht sichtbar, weil er sich in der zurückgeschobenen, vollständig im Gehäuse 2 untergebrachten Position befindet. Demgegenüber ist der zweite Kontaktträger 22 in der aus dem Gehäuse 2 herausgeschobenen Position sichtbar, in welcher er (wie in der Fig. 1 dargestellt) die Stromschiene 14 elektrisch kontaktieren kann. Besonders vorteilhaft ist, dass in der zurückgeschobenen Position der beiden Kontaktträger 20, 22 die Vorrichtung 1 auf der Tragschiene 8 befestigt werden kann und auch der elektrische Verbraucher 10 angeschlossen werden kann, während die Vorrichtung 1 noch spannungsfrei ist. Außerdem können auf diese Weise einzelne Vorrichtungen 1 aus dem in der Fig. 2 dargestellten Verbund einzeln herausgelöst oder hinzugefügt werden. Dadurch ist die Montage und auch die Wartung vereinfacht. Auf den parallel zur Unterseite 4 verlaufenden, treppenartig angeordneten Oberflächen auf der Rückseite sind jeweils Öffnungsschlitze 58 vorgesehen, durch die ein von außen manuell zu betätigendes Betätigungsmittel des Kontaktträgers 20, 22 hindurchtreten kann, oder über die ein Werkzeug von außen eingeführt werden kann, mittels dem der Kontaktträger 20, 22 bewegbar ist.

Auf der stirnseitigen Oberfläche 50 sind geradlinig hintereinander das optische Signalelement 54 sowie das erste und zweite Einstellmittel 46, 52 angeordnet. Bei den Einstellmitteln 46, 52 kann es sich beispielsweise um einen drehbaren Stufenschalter und/oder um ein Potentiometer handeln, wobei insbesondere bei der Verwendung eines Potentiometers mindestens eine Zwischen- oder Endposition rastbar ist für eine Grundeinstellung der Auslösecharakteristik. Auf der sich an die Oberfläche 50 anschließenden ersten Schrägfläche ist neben dem Störmeldeausgang 56 eine Öffnung 60 vorgesehen, mittels der die anzuschließende Störmeldeleitung gelöst und/ oder auch festgelegt werden kann; in gleicher Weise sind auch die weiteren Schrägflächen ausgerüstet, welche die Anschlussklemmen 32, 34 aufweisen.

Infolge der Aneinanderreihung der Vorrichtungen 1 sind auch die zugehörigen Störmeldeausgänge 56 in einer Reihe geradlinig hintereinander angeordnet. Auf diese Weise können besonders einfach Sammelstörleitungen realisiert werden, beispielsweise indem ein Kontaktkamm in mehrere Störmeldeausgänge eingesteckt ist. Alternativ hierzu kann auch mindestens ein Störmeldeausgang individuell zu einer übergeordneten Steuereinrichtung weitergeleitet werden.

Die Fig. 3 zeigt beispielhaft die Einstellbarkeit der Auslösecharakteristik mittels der Einstellmittel 46, 52, wobei in doppelt-logarithmischer Darstellung die Abhängigkeit der Abschaltzeit t_{A} der Vorrichtung 1 von dem auf den Nennstromwert I_{N} bezogenen Strom I in der Lastleitung 38 dargestellt ist. Wie von Leistungsschutzschaltern her bekannt, kann die Auslösecharakteristik durch eine Kennlinie dargestellt werden. Beispielhaft sind drei zugehörige Kennlinien dargestellt. Der Nennstromwert der Vorrichtung 1, beispielsweise 2 A oder 5 A, ist entsprechend dem anzuschließenden Verbraucher 10 gewählt. Eine erfindungsgemäße Vorrichtung 1 kann lediglich ein einziges Einstellmittel aufweisen, mit dem nur dieser Nennstromwert der Vorrichtung 1 einstellbar ist, bei dessen Erreichen die Vorrichtung 1 den Verbraucher 10 schnellstmöglich abschaltet. Die Kennlinie der Abhängigkeit der Abschaltzeit t_{A} vom Stromwert I in der Lastleitung 38 ist dann unveränderl ich.

In einem weiteren Ausführungsbeispiel ist es auch möglich, die Position einer unveränderlichen Kennlinie mit einem Einstellelement horizontal und/oder vertikal in dem Diagramm der Fig. 3 zu verschieben, d.h. den Stromwert I und/oder die Abschaltzeit t_{A} mit einem Faktor zu multiplizieren. Darüber hinaus kann ein Einstellmittel vorgesehen sein, mit dem auch die Kurvenform der Kennlinie verändert werden kann, beispielsweise wie in der Fig. 3 ausgehend von der linken durchgezogenen Kennlinie über die gestrichelt eingezeichnete Kennlinie bis zu der rechten durchgezogenen Kennlinie dargestellt. Gemäß der rechten durchgezogenen Kennlinie toleriert die Vorrichtung 1 für eine längere Zeit einen höheren Strom I und schaltet beispielsweise bei einem Laststrom, der doppelt so hoch ist wie der Nennstrom, erst nach etwa 30 Sekunden ab. Für Verbraucher 10, bei denen dies nicht toleriert werden kann, kann beispielsweise die linke durchgezogene Kennlinie eingestellt werden, gemäß der ein Laststrom, der doppelt so hoch ist wie der Nennstrom der Vorrichtung 1, nach weniger als 100 ms abgeschaltet wird.

Es sind auch Ausführungsbeispiele möglich, in denen die Form der Kennlinie gezielt einstellbar ist, beispielsweise insgesamt oder abschnittsweise steiler oder flacher ausgebildet werden kann. Die Einstellmittel 46, 52 bieten die Möglichkeit, nahezu beliebige Auslösecharakteristiken nachzubilden, insbesondere die Auslösecharakteristik auch ganz speziell an den jeweils angeschlossenen Verbraucher 10 individuell anzupassen. Vorzugsweise ist beispielsweise im Datenspeicher 44 eine werksseitig eingestellte Auslösecharakteristik vorgegeben, die von den Einstellelementen 46, 52 überschrieben oder verändert werden kann.

In den Figuren 4a und 4b sind zwei mögliche Signalverläufe für den Laststrom i(t) dargestellt. In beiden Fällen beträgt der Nennlaststrom I_{N} = I₀. Im ersten Fall der Fig. 4a führt eine verhältnismäßig langsame aber stetige Erhöhung des Laststroms zum Zeitpunkt t1 zu einem Abschalten, weil die Fläche unter dem Integral (i(t) - I₀) · dt größer als ein Grenzwert G wird. Im zweiten Ausführungsbeispiel der Fig. 4b erreicht der Laststrom i(t) kurzzeitig zwar einen Spitzenwert I₂, der größer ist als der Strom I1, es wird aber nicht abgeschaltet, weil das Integral (i(t) - I₀) · dt kleiner als der vorgegebene Grenzwert G bleibt. Je nachdem, welche Rechenoperation auf den Stromverlauf i(t) angewandt wird, beispielsweise auch die Bildung des Integrals (i²(t) - I₀) · dt lassen sich unterschiedliche Verbraucher 10 optimal absichern.

## Patentansprüche

1. Vorrichtung (1) zum selbsttätigen Abschalten oder Schalten eines elektrischen Verbrauchers (10), wobei die Vorrichtung (1) ein in Reihe mit einer Lastleitung (38) des elektrischen Verbrauchers (10) geschaltetes elektronisches Stellelement (36) sowie eine Steuereinheit (40) aufweist, die anhand einer Auslösecharakteristik einen über die Lastleitung (38) fließenden Strom i(t) auswertet und das elektronische Stellelement (36) ansteuert, insbesondere den elektrischen Verbraucher (10) abschaltet, wobei der Verbraucher (10) mindestens zweipolig, vorzugsweise allpolig, an der Vorrichtung (1) anschließbar ist, und wobei die Vorrichtung (1) ein Kontaktorgan (16, 18) aufweist, mittels dem die Vorrichtung (1) mit einem Pol einer Gleichstrom-Versorgungsleitung oder mit einer Phase einer Wechselstrom-Versorgungsleitung elektrisch verbindbar ist, **dadurch gekennzeichnet, dass** das Kontaktorgan (16, 18) in der Vorrichtung (1) bewegbar gelagert ist und sich infolge der Bewegung federelastisch verformt und dadurch mit der Versorgungsleitung elektrisch verbindbar ist.

2. Vorrichtung (1) nach Anspruch 1, **dadurch gekennzeichnet, dass** die Vorrichtung (1) mindestens zwei vorzugsweise schraubenlose Anschlussklemmen (32, 34) aufweist, mittels denen eine Anschlussleitung des Verbrauchers (10) an die Vorrichtung (1) anschließbar ist.

3. Vorrichtung (1) nach Anspruch 2, **dadurch gekennzeichnet, dass** mindestens zwei der Anschlussklemmen (32, 34) über jeweils ein elektronisches Stellelement (36) mit einer Energieversorgungsleitung für den Verbraucher (10) verbindbar sind.

4. Vorrichtung (1) nach Anspruch 3, **dadurch gekennzeichnet, dass** die mindestens zwei Stellelemente (36) unabhängig voneinander von der Steuereinheit (40) ansteuerbar sind.

5. Vorrichtung (1) nach einem der Ansprüche 1 bis 4, **dadurch gekennzeichnet, dass** der Verbraucher (10) mittels der Vorrichtung (1) mindestens zweipolig, vorzugsweise allpolig, von einer Energieversorgungsleitung abschaltbar ist.

6. Vorrichtung (1) nach Anspruch 5, **dadurch gekennzeichnet, dass** in dem von der Energieversorgungsleitung abgeschalteten Zustand eine Prüfstrommessung an dem Verbraucher (10) durchführbar ist.

7. Vorrichtung (1) nach einem der Ansprüche 1 bis 6, **dadurch gekennzeichnet, dass** die Vorrichtung (1) eine Differenz der über die mindestens zwei angeschlossenen Pole des Verbrauchers (10) fließenden Ströme ermittelt.

8. Vorrichtung (1) nach einem der Ansprüche 1 bis 7, **dadurch gekennzeichnet, dass** das Kontaktorgan (16, 18) in der Vorrichtung (1) verschiebbar ist.

9. Vorrichtung (1) nach einem der Ansprüche 1 bis 8, **dadurch gekennzeichnet, dass** die Vorrichtung (1) mit beiden Polen einer Gleichstrom-Versorgungsleitung oder mit mindestens zwei Phasen, vorzugsweise mit allen Phasen, einer Wechselstrom-Versorgungsleitung elektrisch verbindbar ist.

10. Vorrichtung (1) nach einem der Ansprüche 1 bis 9, **dadurch gekennzeichnet, dass** die Vorrichtung (1) ein Trennelement zum galvanischen Trennen der Vorrichtung (1) von dem Verbraucher (10) und/oder zum Trennen der Vorrichtung (1) von einer Versorgungsleitung aufweist, und dass das Trennelement von der Steuereinheit (40) steuerbar ist.

11. Vorrichtung (1) nach einem der Ansprüche 1 bis 10, **dadurch gekennzeichnet, dass** die Vorrichtung (1) in einem Gehäuse (2) angeordnet ist, mittels dem die Vorrichtung (1) auf einer Tragschiene (8) festlegbar ist und auf der Tragschiene (8) anreihbar ist an weitere Vorrichtungen (1) und/oder an andere Komponenten der elektrischen Installation.

## Claims

1. A device (1) for automatically switching off or switching an electrical consumer (10), the device (1) having an electronic actuating element (36) and a control unit (40) connected in series with a load line (38) of the electrical consumer (10) and which evaluates a current i(t) flowing via the load line (38) by means of a trigger characteristic and controls the electronic actuating element (36), and in particular switches off the electrical consumer (10), the consumer (10) being able to be connected to the device (1) with at least two poles, preferably all poles, and the device (1) having a contact element (16, 18) by means of which the device (1) can be electrically connected to a pole of a DC supply line or to a phase of an AC supply line, **characterised in that** the contact element (16, 18) is mounted moveably within the device (1) and, as a result of the movement, deforms spring elastically, and so can be connected electrically to the supply line.

2. The device (1) according to Claim 1, **characterised in that** the device (1) has at least two preferably screwless connecting terminals (32, 34) by means of which a connecting line of the consumer (10) can be connected to the device (1).

3. The device (1) according to Claim 2, **characterised in that** at least two of the connecting terminals (32, 34) can be connected to an energy supply line for the consumer (10) via a respective electronic actuating element (36).

4. The device (1) according to Claim 3, **characterised in that** the at least two actuating elements (36) can be controlled independently of one another by the control unit (40).

5. The device (1) according to any of Claims 1 to 4, **characterised in that** the consumer (10) can be switched off from an energy supply line with at least two poles, preferably all poles, by means of the device (1).

6. The device (1) according to Claim 5, **characterised in that** in the state switched off from the energy supply line, a test current measurement can be taken on the consumer (10).

7. The device (1) according to any of Claims 1 to 6, **characterised in that** the device (1) determines a difference between the currents flowing via the at least two connected poles of the consumer (10).

8. The device (1) according to any of Claims 1 to 7, **characterised in that** the contact element (16, 18) can be displaced within the device (1).

9. The device (1) according to any of Claims 1 to 8, **characterised in that** the device (1) can be electrically connected to both poles of a DC supply line or to at least two phases, preferably to all of the phases of an AC supply line.

10. The device (1) according to any of Claims 1 to 9, **characterised in that** the device (1) has a separating element for galvanically separating the device (1) from the consumer (10) and/or for separating the device (1) from a supply line, and that the separating element can be controlled by the control unit (40).

11. The device (1) according to any of Claims 1 to 10, **characterised in that** the device (1) is disposed within a housing (2) by means of which the device (1) can be secured to a support rail (8) and can be lined up alongside other devices (1) and/or alongside other components of the electrical installation on the support rail (8).

## Revendications

1. Dispositif (1) de mise automatique hors circuit ou en circuit d'un récepteur (10) électrique, le dispositif (1) ayant un élément (36) électronique de réglage, monté en série avec une ligne (38) de charge du récepteur (10) électrique ainsi qu'une unité (40) de commande, qui, à l'aide d'une caractéristique de déclenchement, exploite un courant i(t) passant dans la ligne (38) de charge et commande l'élément (36) électronique de réglage, notamment en mettant hors circuit le récepteur (10) électrique, le récepteur (10) électrique pouvant être raccordé, au moins bipolairement, de préférence par tous les pôles, au dispositif (1) et le dispositif (1) ayant un organe (16, 18) de contact, au moyen duquel le dispositif (1) peut être relié électriquement à un pôle d'une ligne d'alimentation en courant continu ou à une phase d'une ligne d'alimentation en courant alternatif, **caractérisé en ce que** l'organe (16, 18) de contact est monté mobile dans le dispositif (1) et, en raison du déplacement, se déforme élastiquement comme un ressort et, ainsi, peut être relié électriquement à la ligne d'alimentation.

2. Dispositif (1) suivant la revendication 1, **caractérisé en ce que** le dispositif (1) a au moins deux bornes (32, 34) de connexion, de préférence sans vis, au moyen desquelles une ligne de connexion du récepteur (10) peut être raccordée au dispositif (1).

3. Dispositif (1) suivant la revendication 2, **caractérisé en ce qu'**au moins deux des bornes (32, 34) de connexion peuvent, par respectivement un élément (36) électronique de réglage, être reliées à une ligne d'alimentation en énergie du récepteur (10).

4. Dispositif (1) suivant la revendication 3, **caractérisé en ce que** les au moins deux éléments (36) de réglage peuvent être commandés indépendamment l'un de l'autre par l'unité (40) de commande.

5. Dispositif (1) suivant l'une des revendications 1 à 4, **caractérisé en ce que** le récepteur (10) peut, au moyen du dispositif (1), au moins bipolairement, de préférence par tous les pôles, être débranché d'une ligne d'alimentation en énergie.

6. Dispositif (1) suivant la revendication 5, **caractérisé en ce que**, dans l'état débranché de la ligne d'alimentation en énergie, une mesure de courant de contrôle peut être effectuée sur le récepteur (10).

7. Dispositif (1) suivant l'une des revendications 1 à 6, **caractérisé en ce que** le dispositif (1) détermine une différence des courants passant par les au moins deux pôles raccordés du récepteur (10).

8. Dispositif (1) suivant l'une des revendications 1 à 7, **caractérisé en ce que** l'organe (16, 18) de contact peut être déplacé dans le dispositif (1).

9. Dispositif (1) suivant l'une des revendications 1 à 8, **caractérisé en ce que** le dispositif (1) peut être relié électriquement aux deux pôles d'une ligne d'alimentation en courant continu ou à au moins deux phases, de préférence à toutes les phases, d'une ligne d'alimentation en courant alternatif.

10. Dispositif (1) suivant l'une des revendications 1 à 9, **caractérisé en ce que** le dispositif (1) a un élément de séparation pour séparer galvaniquement le dispositif (1) du récepteur (10) et/ou pour séparer le dispositif (1) d'une ligne d'alimentation et **en ce que** l'élément de séparation peut être commandé par l'unité (40) de commande.

11. Dispositif (1) suivant l'une des revendications 1 à 10, **caractérisé en ce que** le dispositif (1) est disposé dans un boîtier (2), au moyen duquel le dispositif (1) peut être fixé sur un profilé (8) porteur et peut être joint sur le profil (8) porteur à d'autres dispositifs (1) et/ou à d'autres composants de l'installation électrique.
